(19) **Europäisches Patentamt European Patent Office Office européen des brevets**

(11) **EP 4 016 549 B1**

(12) **FASCICULE DE BREVET EUROPEEN**

(45) Date de publication et mention de la délivrance du brevet:
**28.05.2025  Bulletin 2025/22**

(21) Numéro de dépôt: **21212899.5**

(22) Date de dépôt: **07.12.2021**

(51) Classification Internationale des Brevets (IPC):
*G21C 17/112* (2006.01)    *G01K 17/00* (2006.01)

(52) Classification Coopérative des Brevets (CPC):
**G21C 17/112; G01K 17/006;** Y02E 30/30

(54) **NOYAU DE MESURE POUR LA MESURE D'ECHAUFFEMENT NUCLEAIRE EN REACTEUR NUCLEAIRE ET CAPTEUR CALORIMETRIQUE INTEGRANT UN TEL NOYAU DE MESURE**

MESSKERN FÜR DIE MESSUNG DER NUKLEAREN ERWÄRMUNG IN EINEM KERNREAKTOR UND KALORIMETRISCHER SENSOR MIT EINEM SOLCHEN MESSKERN

MEASUREMENT CORE FOR MEASURING NUCLEAR HEATING IN A NUCLEAR REACTOR AND CALORIMETRIC SENSOR INCLUDING SUCH A MEASUREMENT CORE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.12.2020  FR 2013804**

(43) Date de publication de la demande:
**22.06.2022  Bulletin 2022/25**

(73) Titulaires:
• **Commissariat à l'Energie Atomique et aux Energies Alternatives**
**75015 Paris (FR)**
• **Université d'Aix Marseille**
**13007 Marseille 7 (FR)**
• **Centre national de la recherche scientifique**
**75016 Paris (FR)**

(72) Inventeurs:
• **REYNARD-CARETTE, Christelle**
**13013 MARSEILLE (FR)**
• **VOLTE, Adrien**
**13005 MARSEILLE (FR)**
• **LYOUSSI, Abdallah**
**04100 MANOSQUE (FR)**
• **CARETTE, Michel**
**13013 MARSEILLE (FR)**

(74) Mandataire: **Atout PI Laplace Immeuble Up On 25 Boulevard Romain Rolland CS 40072 75685 Paris Cedex 14 (FR)**

(56) Documents cités:
**KR-B1- 101 879 343      US-A1- 2005 254 552 US-A1- 2007 148 416**

• **ANONYMOUS: "Thermistance - Wikipédia", 11 September 2020 (2020-09-11), pages 1 - 5, XP055855929, Retrieved from the Internet <URL:https://fr.wikipedia.org/w/index.php? title=Thermistance&oldid=174616228> [retrieved on 20211028]**

**Description**

**Domaine technique de l'invention**

L'invention se situe dans le domaine de la mesure et de l'instrumentation pour les réacteurs nucléaires et plus particulièrement dans le domaine de la mesure des échauffements nucléaires ou encore des énergies déposées par les rayonnements dans la matière (doses et débits de doses absorbées par les différentes matières).
L'invention concerne précisément un noyau de mesure ainsi qu'un capteur calorimétrique comprenant un tel noyau de mesure, et ce, pour la mesure d'échauffement nucléaire, en réacteur nucléaire.

**Etat de la technique**

L'échauffement nucléaire est induit notamment par les rayonnements photoniques et neutroniques qui existent au sein d'un réacteur nucléaire.
On appelle échauffement nucléaire le dépôt d'énergie par unité de masse et de temps (J.s$^{-1}$.g$^{-1}$ ou W/g) induit par les interactions des rayonnements avec la matière.
Les rayonnements neutroniques peuvent être quantifiés à l'aide de systèmes spécifiques tels que les chambres à fission, les collectrons ou encore les détecteurs à activation. Les rayonnements photoniques peuvent être quant à eux quantifiés à l'aide de systèmes spécifiques tels que les chambres à ionisation ou les collectrons. Les rayonnements photoniques et neutroniques de par leur absence de charges et de leurs libres parcours moyens dans la matière ont la propriété de déposer leur énergie dans la matière (dans des matériaux) même « éloignés » du lieu de génération de ces rayonnements (canaux expérimentaux en cœur, réflecteurs...), et en conséquence d'échauffer lesdits matériaux.
Par matériaux, on entend les matériaux contenus dans le réacteur nucléaire, par exemple les structures du réacteur, les dispositifs expérimentaux, y compris tous les matériaux présents en cœur de réacteur (dont les combustibles nucléaires).
Il est indiqué de quantifier l'échauffement nucléaire global produit par les rayonnements, plutôt que les flux particulaires, afin de déterminer l'effet de ces rayonnements.
Ceci est particulièrement adapté pour un réacteur nucléaire de type expérimental dans lequel les structures et les systèmes internes (dispositifs expérimentaux par exemple) diffèrent selon les canaux expérimentaux et selon les programmes expérimentaux. Il est d'autant plus nécessaire de mesurer l'échauffement nucléaire en réacteur nucléaire de type expérimental qu'il s'agit d'une grandeur clé pour dimensionner les dispositifs expérimentaux, notamment du point de vue de leur résistance mécanique, et de leur tenue thermique.
L'échauffement nucléaire est mesuré classiquement par une méthode calorimétrique, en utilisant un calorimètre. Une méthode calorimétrique consiste essentiellement à déterminer l'échauffement nucléaire d'un petit élément de matière, pouvant être également nommé échantillon ou noyau, dont la masse est connue, par la mesure de la variation de température(s) ou d'une différence de température(s).
Dans la suite de la description, ce petit élément de matière sera dénommé « échantillon ». L'échantillon est habituellement en graphite ou métallique.
La variation de température(s) ou la différence de température(s) peut être due aux effets des rayonnements photoniques et neutroniques. Elle peut également être due à un système de chauffage intégré au calorimètre, combiné ou non avec les rayonnements, par exemple pour étalonner le calorimètre hors ou en réacteur, ou pour mettre en œuvre un protocole de mesure dit « de zéro » en réacteur ou un protocole de mesure dit « d'addition de courant » en réacteur. De tels protocoles de mesure sont décrits dans le brevet FR 2 968 448.
Il est utilisé couramment un calorimètre différentiel à deux éprouvettes. Un calorimètre différentiel est de type non adiabatique dans la mesure où il existe des échanges de chaleur entre le calorimètre et le fluide caloporteur extérieur au calorimètre.
Le brevet FR 2 968 448 précité décrit un calorimètre différentiel comprenant une cellule calorimétrique à deux éprouvettes, essentiellement identiques, superposées l'une au-dessus de l'autre selon un axe principal, une première éprouvette étant pleine, c'est-à-dire comprenant un échantillon de matière dans lequel le dépôt d'énergie doit être mesuré, et une seconde éprouvette étant vide et servant de référence. Chaque éprouvette est reliée à un socle dans l'axe principal par l'intermédiaire d'un cylindre de liaison, et deux thermocouples par éprouvette sont disposés, l'un au sommet du cylindre de liaison et l'autre au niveau du socle. On mesure la différence de température entre les deux thermocouples. La mesure d'échauffement nucléaire se base sur une double différence de température entre les deux éprouvettes. Le dépôt d'énergie est déduit de cette double différence de température entre les deux éprouvettes, et s'exprime en W/g.
Afin de pallier l'absence de juxtaposition des éprouvettes dans une telle configuration, le brevet FR 2 968 448 impose à la cellule calorimétrique un déplacement le long de l'axe principal avec des mesures de différences de température pour chaque éprouvette à chaque position axiale, le déplacement étant associé à une synchronisation adéquate des mesures.

Afin de permettre de réaliser des mesures d'échauffement nucléaire en privilégiant des échanges de chaleur radiaux, il a été développé et décrit dans le brevet FR 3 034 867 une cellule calorimétrique à au moins une éprouvette qui comprend : un corps configuré pour contenir un échantillon, sensible à la chaleur, le long d'un axe longitudinal et des moyens pour évacuer la chaleur du corps vers l'extérieur de l'éprouvette comprenant une structure périphérique située en périphérie du corps et une structure centrale de liaison mécanique disposée radialement entre le corps et la structure périphérique pour transférer la chaleur radialement. La cellule calorimétrique comprend en outre deux thermocouples par éprouvette : l'un à l'interface corps/structure centrale et l'autre à l'interface structure centrale/structure périphérique. La cellule calorimétrique comprend généralement deux éprouvettes avec une enveloppe externe encapsulant l'ensemble.

Un inconvénient des cellules calorimétriques décrites, qu'elles soient à une éprouvette ou à deux éprouvettes pour calorimètre différentiel est que ces cellules sont constituées de plusieurs éléments formant une structure dont la masse et les dimensions interviennent dans son comportement physique, et notamment induisent des échauffements de la structure elle-même, augmentant les températures absolues atteintes au sein du calorimètre, alors même que seul l'échauffement de l'échantillon est recherché. Cet inconvénient explique notamment la nécessité d'effectuer des mesures différentielles, avec deux éprouvettes, afin de corriger les biais induits par les dépôts d'énergie parasites notamment sur la structure elle-même, et ainsi identifier l'échauffement du seul échantillon et remonter au débit de dose absorbé par ledit échantillon. Or l'utilisation de deux éprouvettes au lieu d'une seule rend la masse et les dimensions de la cellule calorimétrique plus importantes. Cet inconvénient nécessite, comme décrit dans le brevet FR 2 968 448, de déplacer les deux éprouvettes pour réaliser une mesure à une côte donnée, ce qui complexifie beaucoup la mesure et rallonge le temps de mesure.

En outre, comme on peut atteindre plusieurs centimètres de hauteur pour une cellule calorimétrique simple (une seule éprouvette) à plusieurs dizaines de centimètres de hauteur pour une cellule calorimétrique différentielle (deux éprouvettes), cela limite l'intégration des calorimètres dans les canaux expérimentaux des réacteurs compte tenu de l'espace disponible dans lesdits canaux. Cela limite aussi leur couplage avec d'autres capteurs dans des dispositifs multi-capteurs pour des mesures dans lesdits canaux. Cela empêche également l'intégration des calorimètres dans certains dispositifs d'irradiation.

De plus, la taille des échantillons (quelques centimètres) des calorimètres connus ne permet pas une mesure locale sur quelques millimètres.

Enfin, la masse et les dimensions des calorimètres (notamment différentiels) induisent des temps de réponse importants ayant un impact sur la durée de la mesure (il est en effet nécessaire d'attendre qu'un régime stationnaire soit établi), et sur la température maximale atteinte dans le calorimètre.

L'invention vise à surmonter les inconvénients précités de l'art antérieur.

Plus précisément, l'invention vise à disposer d'une cellule calorimétrique, désignée par la suite « capteur calorimétrique », qui soit adaptée pour la mesure d'échauffement nucléaire en réacteur nucléaire, et dont la taille et la masse soient réduites par rapport aux cellules calorimétriques connues, de manière à réduire l'encombrement, et dont la taille de l'échantillon compris dans le capteur soit réduite de manière à améliorer la résolution spatiale de la mesure.

L'invention vise également à limiter les échauffements parasites dans la structure de la cellule calorimétrique, et ce, sans nécessairement avoir à réaliser un déplacement dudit capteur pour la mesure de l'échauffement nucléaire à une côte donnée et/ou à réaliser une mesure différentielle avec deux éprouvettes.

Il est avantageusement recherché un capteur calorimétrique miniaturisé à temps de réponse court et ne nécessitant pas un déplacement pour la mesure de l'échauffement nucléaire à une côte donnée, de manière à réduire le temps de mesure (de plusieurs dizaines de minutes à quelques minutes voire à quelques dizaines de secondes selon la configuration du capteur). Il est particulièrement recherché un capteur calorimétrique dont le nombre de câbles est réduit.

**Exposé de l'invention**

Un premier objet de l'invention permettant de remédier à ces inconvénients est un noyau de mesure calorimétrique pour la mesure d'échauffement nucléaire dans un réacteur nucléaire, ledit noyau de mesure s'étendant selon une direction longitudinale et présentant un plan principal, et comprenant au moins :

- une première couche de matière, formant un premier échantillon ;
- une première couche mince en isolant électrique disposée sur le premier échantillon ;
- une couche conductrice mince formant une résistance électrique chauffante disposée sur la première couche d'isolant électrique ;
- une deuxième couche mince en isolant électrique disposée sur la résistance électrique chauffante ;

la première couche mince en isolant présentant des dimensions dans le plan principal adaptées à celles du premier échantillon ;
les couches minces en isolant électrique étant configurées pour isoler la résistance chauffante de l'échantillon et/ou protéger ladite résistance chauffante ; et

le premier échantillon présentant de préférence des dimensions inférieures ou égales à une quinzaine, voire une dizaine de millimètres dans le plan principal, et/ou une épaisseur inférieure ou égale à 10 millimètres, encore plus préférentiellement inférieure ou égale à 2 millimètres.

Une couche de matière forme un échantillon pour lequel la quantification de l'échauffement nucléaire est recherchée. En d'autres termes, la quantification de l'échauffement nucléaire est recherchée seulement pour le (ou les) échantillons.

Par couche « mince », on entend une couche dont l'épaisseur est inférieure ou égale à 10 $\mu$m.

Selon les configurations du noyau de mesure selon l'invention, les dimensions dans le plan visent la longueur, la largeur et/ou le diamètre et correspondent aux dimensions par rapport au plan principal du noyau de mesure. L'épaisseur et la profondeur désignent la dimension selon une direction perpendiculaire au plan principal. Les termes « supérieur » ou « inférieur sont à comprendre par référence à la direction longitudinale du noyau de mesure et du capteur calorimétrique lorsqu'ils sont disposés à la verticale sachant qu'ils peuvent être disposés horizontalement ou obliquement.

L'invention permet, en utilisant des couches d'épaisseur et de dimensions dans le plan réduites, de réduire la taille et la masse du noyau de mesure et du capteur calorimétrique. Cela permet d'avoir une mesure plus locale, une meilleure résolution spatiale, tout en ne nécessitant pas de déplacement du capteur calorimétrique pour une mesure à une côte donnée. Cela permet en outre une réduction du temps de réponse, qui, couplée à l'absence de déplacement, entraine des temps de mesure plus courts. De plus, cela permet une réduction de la masse totale diminuant les échauffements parasites de la structure et donc les températures maximales atteintes. En outre l'invention permet de réduire le nombre de câbles de connexion électrique, du fait de l'utilisation d'une seule éprouvette (c'est-à-dire un seul noyau de mesure).

De plus, le capteur calorimétrique du fait de sa taille réduite permet de disposer plusieurs capteurs calorimétriques dans un canal de mesure en réacteur nucléaire, éventuellement avec des échantillons de natures différentes selon les capteurs, voire le coupler à d'autres capteurs, tels que des détecteurs de rayonnements (chambres d'ionisation, chambres à fission, collectrons, ...).

Le noyau de mesure calorimétrique selon l'invention peut en outre comporter l'une ou plusieurs des caractéristiques suivantes prises isolément ou suivant toutes combinaisons techniques possibles.

Selon un mode de réalisation, le noyau de mesure comprend en outre :

- une deuxième couche de matière, formant un deuxième échantillon ; la deuxième couche mince en isolant électrique étant entre la résistance chauffante et le deuxième échantillon ;

  la deuxième couche mince en isolant électrique présentant des dimensions dans le plan principal adaptées à celles du deuxième échantillon ;

  la deuxième couche en isolant électrique étant configurée pour isoler la résistance chauffante du deuxième échantillon ;

  le deuxième échantillon présentant de préférence des dimensions inférieures ou égales à une quinzaine, voire une dizaine de millimètres dans le plan principal, et/ou une épaisseur inférieure ou égale à 10 millimètres, encore plus préférentiellement inférieure ou égale à 2 millimètres. Cela permet une symétrie d'ensemble, l'élément chauffant se retrouvant au centre d'un ensemble composé de deux échantillons et de deux couches minces d'isolant électrique, et une meilleure homogénéité thermique dans l'échantillon.

Selon un mode de réalisation particulier, le premier échantillon présente une longueur, respectivement un diamètre, supérieur(e) à la longueur, respectivement au diamètre, du deuxième échantillon. Le premier échantillon peut être notamment adapté pouvoir recevoir toute la surface de la résistance chauffante ainsi que ses connexions, tandis que le deuxième échantillon peut être adapté pour recouvrir la résistance chauffante à l'exception de ses connexions.

Selon un mode de réalisation, la résistance chauffante comprend une piste en un matériau conducteur conformée en serpentin, spirale, méandre(s) ou toute autre forme adaptée à la forme des échantillons.

Selon un mode de réalisation, la résistance chauffante est en platine, en un alliage nickel-chrome, en constantan, ou tout autre matériau adapté pour former une résistance chauffante.

Selon un mode de réalisation, les couches minces en isolant électrique sont en oxyde de silicium, en alumine, en nitrure de silicium, ou en oxyde de magnésium.

Selon un mode de réalisation, le (ou les) échantillon(s) est (sont) en graphite, en acier inoxydable, en aluminium, ou en titane.

Selon un mode de réalisation, le (ou les) échantillon(s) présente(nt) un état de surface adapté pour le dépôt d'au moins une couche mince en isolant électrique par une technique de dépôt de couches minces, par exemple un état de surface poli miroir. Cela permet d'améliorer l'adhérence des couches minces de l'élément chauffant sur le(s) échantillon(s).

Selon un mode de réalisation, le noyau de mesure comprend en outre au moins une couche d'accroche entre la résistance chauffante et au moins une couche mince en isolant électrique et/ou entre au moins un échantillon et au moins une couche mince en isolant électrique. Une couche d'accroche permet une meilleure accroche entre deux couches.

Selon un mode de réalisation, le noyau de mesure comprend en outre au moins une couche fonctionnelle, pouvant être une couche de bore, de cadmium, de carbure de silicium (SiC) et/ou de lithium, ladite couche fonctionnelle pouvant être déposée sur la face extérieure d'au moins un échantillon. Elle peut présenter par exemple une épaisseur du même ordre que les autres couches minces. Une telle couche fonctionnelle peut permettre de : générer des interactions spécifiques sélectives, et/ou convertir des particules/rayonnements, et/ou amplifier l'échauffement nucléaire.

Selon un mode de réalisation, le premier échantillon, et le cas échéant le deuxième échantillon, est de forme parallélépipédique, formant un noyau parallélépipédique.

Selon un mode de réalisation alternatif, le premier échantillon, et le cas échéant le deuxième échantillon, est de forme hémicylindrique formant un noyau hémicylindrique ou cylindrique, la longueur de cylindre s'étendant selon la direction longitudinale.

Selon un autre mode de réalisation alternatif, le premier échantillon, et le cas échéant le deuxième échantillon, est en forme de disque, le diamètre de disque s'étendant selon la direction longitudinale.

Selon un mode de réalisation, au moins un échantillon est ajouré au niveau d'au moins une portion supérieure et/ou inférieure, de manière à former au moins deux pattes supérieures et/ou au moins deux pattes inférieures.

Selon un mode de réalisation particulier, les pattes supérieures sont dimensionnées pour accueillir les éléments de connexion de la résistance chauffante, les pattes supérieures ayant par exemple une largeur supérieure aux pattes inférieures.

Selon un mode de réalisation particulier, la résistance chauffante est configurée pour former une sonde résistive de température, de manière à mesurer la température dans une zone comprenant un point chaud de mesure de température, ladite résistance chauffante étant alors reliée à un moyen de mesure de la résistance, de préférence par un montage quatre fils.

Un deuxième objet de l'invention est un capteur calorimétrique pour la mesure d'échauffement nucléaire dans un réacteur nucléaire, ledit capteur comprenant :

- une enveloppe externe étanche aux fluides ;
- un gaz contenu dans l'enveloppe externe ;
- un noyau de mesure selon le premier objet de l'invention, ledit noyau étant disposé dans l'enveloppe externe ;
- des moyens de liaison aptes à maintenir le noyau de mesure dans l'enveloppe externe et à transférer la chaleur entre ledit noyau et ladite enveloppe ;
- des moyens de mesure de température, comprenant un premier moyen de mesure de température apte à mesurer la température en un point chaud, de préférence au plus près de l'élément chauffant du noyau de mesure, et un deuxième moyen de mesure de température apte à mesurer la température en un point froid, de préférence sur une paroi de l'enveloppe.

Selon un mode de réalisation, les moyens de mesure de température comprennent au moins un thermocouple, de préférence un micro-thermocouple filaire ou un micro-thermocouple en couches minces.

Selon un mode de réalisation, le premier moyen de mesure de température est formé par la résistance chauffante.

Selon un mode de réalisation, les moyens de liaison comprennent des entretoises pouvant avoir des formes et des matériaux différents.

Selon un mode de réalisation, au moins un échantillon est ajouré au niveau d'au moins une portion supérieure et/ou inférieure, de manière à former au moins deux pattes supérieures et/ou au moins deux pattes inférieures, les moyens de liaison étant tout ou partie formés par lesdites pattes.

Selon un mode de réalisation, l'enveloppe est en aluminium, en acier inoxydable ou en titane.

Le noyau de mesure calorimétrique et le capteur calorimétrique selon l'invention peuvent comporter l'une quelconque des caractéristiques précédemment énoncées, prises isolément ou selon toutes combinaisons techniquement possibles avec d'autres caractéristiques.

**Brève description des figures**

D'autres caractéristiques, détails et avantages de l'invention ressortiront à la lecture de la description faite en référence aux figures annexées données à titre d'exemple :

[Fig.1A],
[Fig.1B],

[Fig.1C], et

[Fig.1D] représentent un noyau de mesure selon un premier mode de réalisation de l'invention représenté en vue éclatée et à l'horizontale.

[Fig.2] représente le noyau de mesure selon le premier mode de réalisation de l'invention représenté en vue de face et à la verticale.

[Fig.3] représente un noyau de mesure selon un deuxième mode de réalisation de l'invention représenté en vue de face.

[Fig.4] représente un noyau de mesure selon un troisième mode de réalisation de l'invention représenté en vue éclatée et à l'horizontale.

[Fig.5] représente un noyau de mesure selon un quatrième mode de réalisation de l'invention représenté en vue éclatée et à la verticale.

[Fig.6A] et

[Fig.6B] représentent un capteur calorimétrique selon un premier mode de réalisation.

[Fig.7] représente un capteur calorimétrique selon un deuxième mode de réalisation

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## Description détaillée de l'invention

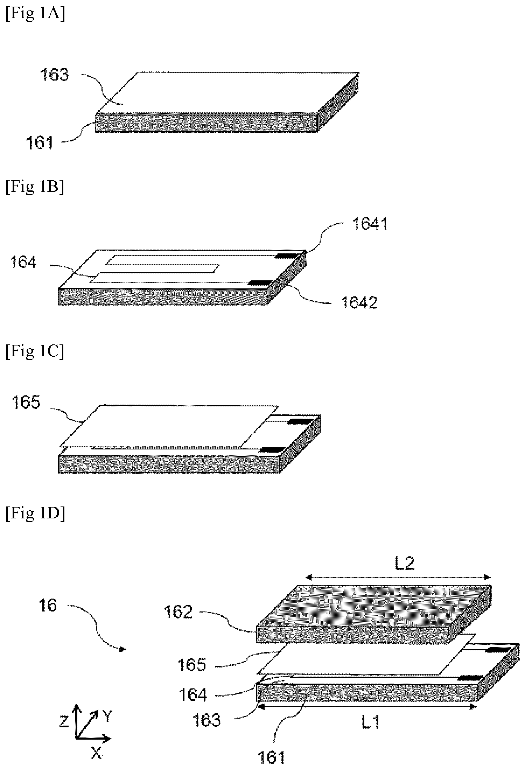

Les figures 1A à 1D, 2, 3, 4 et 5 représentent plusieurs modes de réalisation d'un noyau de mesure forme à l'invention, et apte à être assemblé dans un capteur calorimétrique. La direction X correspond à la direction longitudinale du noyau de mesure et du capteur, la direction Y à la direction transversale et XY correspond au plan principal du noyau de mesure. La direction Z est la direction orthogonale au plan principal.

Premier mode de réalisation (noyau de mesure)

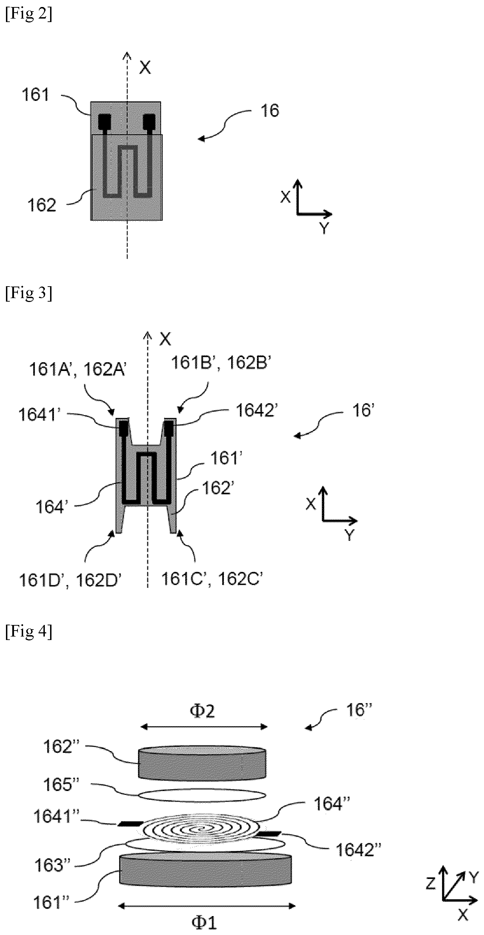

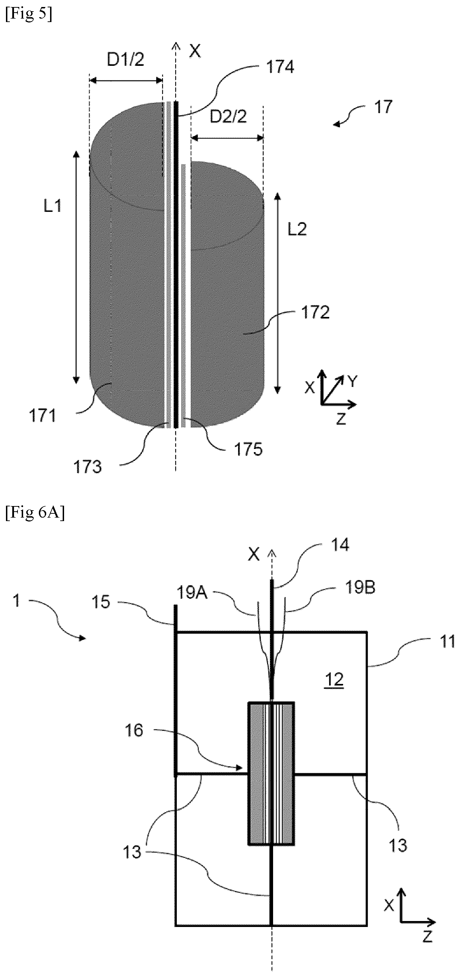

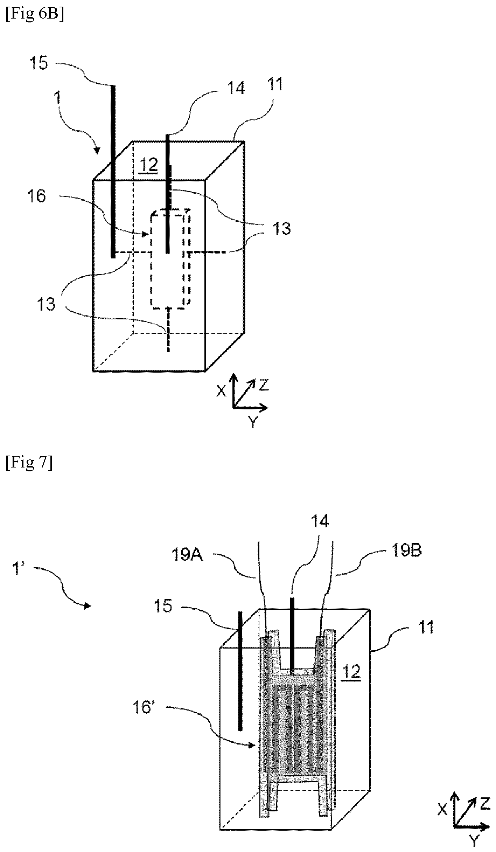

Les figures 1A à 1D illustrent un noyau de mesure 16 selon un premier mode de réalisation, représenté en vue éclatée, et selon les différentes étapes d'assemblage des différents éléments dudit noyau de mesure. La direction longitudinale X du noyau de mesure représenté est orientée horizontalement, bien que celui-ci puisse être disposé verticalement, comme représenté en figure 2, et notamment verticalement dans le capteur calorimétrique comme représenté en figures 6A et 6B.

Le noyau de mesure 16, de forme parallélépipédique, comprend dans l'ordre d'empilement :

- une première couche de matière formant un premier échantillon 161 dans lequel la quantification de l'échauffement nucléaire est recherchée;
- une première couche mince en isolant électrique 163 ;
- une résistance électrique chauffante 164 (couche conductrice mince) ;
- une deuxième couche mince en isolant électrique 165 ;
- une deuxième couche de matière formant un deuxième échantillon 162 dans lequel la quantification de l'échauffement nucléaire est recherchée.

L'ensemble résistance chauffante et couches minces en isolant forme un élément chauffant, la résistance chauffante étant prise en sandwich entre les deux couches minces en isolant.

Les couches constituant le noyau de mesure sont de forme parallélépipédique, excepté la résistance qui présente une forme particulière, décrite plus après. Les couches sont empilées les unes sur les autres.

Un échantillon est un élément de matière de masse connue, dont on cherche à mesurer l'échauffement nucléaire. Le matériau d'un échantillon peut être notamment en graphite, en acier inoxydable, en aluminium ou en titane. La largeur et la longueur d'un échantillon varient entre quelques millimètres à une quinzaine de millimètres, voire une dizaine de millimètres. L'épaisseur d'un échantillon est de l'ordre d'un à deux millimètres, une épaisseur minimale étant requise afin d'avoir des dépôts d'énergie significatifs. Dans ce mode de réalisation, les deux échantillons ont sensiblement les mêmes dimensions à l'exception de leurs longueurs L1, L2.

Le premier échantillon 161 présente une longueur L1 supérieure à la longueur L2 du deuxième échantillon 162 pour pouvoir recevoir toute la surface de la résistance chauffante 164 ainsi que ses connexions, représentées sous la forme de deux pads 1641 et 1642, tandis que le deuxième échantillon a une longueur L2 réduite de manière à recouvrir la résistance chauffante à l'exception des connexions.

A titre d'exemple, les premier et deuxième échantillons peuvent avoir les dimensions respectives suivantes (longueur x largeur x épaisseur) :

- 13 mm x 10 mm x 1 mm (premier échantillon 161) et 10 mm x 10 mm x 1 mm (deuxième échantillon 162) ; ou
- 7 mm x 4 mm x 1 mm (premier échantillon 161) et 4 mm x 4 mm x 1 mm (deuxième échantillon 162).

Par ailleurs, la première couche isolante 163 présente également une longueur supérieure à celle de la deuxième couche isolante 165.Chaque couche en isolant est disposée entre la résistance chauffante et un des échantillons, afin d'isoler électriquement ladite résistance chauffante (couche conductrice) des échantillons. Chaque couche en isolant doit donc présenter des dimensions suffisantes dans le plan pour isoler électriquement la résistance chauffante de chaque échantillon, mais également pour pouvoir être déposée sur ledit échantillon. En d'autres termes, les dimensions dans le plan d'une couche en isolant doivent également être adaptées à celles de l'échantillon avec lequel elles sont directement en contact. L'épaisseur d'une couche isolante est comprise entre environ 100 nm et quelques µm. Une couche isolante peut être notamment en oxyde de silicium, en alumine, en nitrure de silicium, en oxyde de magnésium. L'alumine $\alpha$ est particulièrement intéressante du fait de sa température de fusion très élevée.

L'état de surface des échantillons est un élément important dans la mesure où il conditionne l'adhérence des couches minces de l'élément chauffant sur lesdits échantillons. De préférence, les échantillons ont un état de surface poli miroir. Pour réaliser un état de surface adapté, les échantillons peuvent subir une étape de préparation préalable au dépôt des couches minces, pouvant consister en un nettoyage de quelques minutes dans un bain à ultrason avec de l'acétone, puis de l'éthanol et enfin à l'eau distillée. Cette préparation des échantillons permet d'améliorer les interfaces entre les couches minces et les échantillons et d'améliorer ainsi les propriétés physico-chimiques de l'ensemble.

La résistance chauffante comprend une piste en un matériau conducteur conformé par exemple en serpentin. Le matériau conducteur peut être notamment du platine, un alliage nickel-chrome, ou un autre alliage (tel que le constantan). L'épaisseur de la résistance chauffante est comprise entre environ quelques dizaines de nm et quelques µm. La largeur de la piste est inférieure ou égale à 0,5 mm. L'ensemble des caractéristiques de la piste (forme, épaisseur, largeur, longueur) est fonction de la valeur de résistance souhaitée.

Alternativement, la résistance chauffante peut être sous forme de spirale, notamment de spirale circulaire, ou toute autre forme adaptée pour former une résistance, notamment en méandres et adaptée à la forme des échantillons.

L'ensemble résistance chauffante et couches en isolant forme un élément chauffant qui est fabriqué en même temps que la fabrication du noyau de mesure.

L'élément chauffant peut être fabriqué par une des techniques connues de microélectronique. La résistance chauffante peut être notamment réalisée par une technique de photolithographie lift-off couplée avec une technique de dépôt de couche mince (notamment la pulvérisation cathodique) pour obtenir la forme souhaitée, par exemple en serpentin ou en spirale. Les couches minces isolantes peuvent être déposées par une technique de dépôt de couches minces (notamment la pulvérisation cathodique ou l'évaporation thermique sous vide).

L'élément chauffant permet d'étalonner le capteur calorimétrique avant intégration dans un réacteur nucléaire (hors milieu irradié). Il permet notamment de simuler localement l'échauffement nucléaire par effet Joule. L'élément chauffant peut également permettre d'étalonner le capteur calorimétrique après intégration dans un réacteur nucléaire (en milieu irradié) et d'appliquer des méthodes de mesures dites « de zéro » ou « d'addition de courant » pour lesquelles il est nécessaire de fournir une énergie supplémentaire à l'énergie déposée par interaction rayonnements/matière (méthodes de mesures dont les principes sont décrits dans le brevet FR 2 968 448 mais qui sont adaptées de manière connue de l'homme du métier pour le noyau de mesure selon l'invention).

Variante de réalisation

Selon une variante de réalisation, l'élément chauffant, et en particulier la résistance chauffante, peut permettre de former un capteur de température, plus précisément une sonde résistive de température, pour mesurer la température dans la zone du point chaud. Dans ce cas, la résistance chauffante est une résistance sensible à la température R(T), et la température peut être donnée par la loi (approximation linéaire) :

[Math.1]

$$R(T) = R(T_0) \times \big(1 + \alpha(T - T_0)\big) = R(T_0) + R(T_0) \times \alpha(T - T_0)$$

où $\alpha$ est le coefficient de température du matériau conducteur de la résistance.

En mesurant la résistance R(T) et en connaissant la résistance initiale $R(T_0)$ donnée pour une température initiale $T_0$, on en déduit la différence de température $\Delta T$ correspondant à $T-T_0$.

Il est à noter que la résistance initiale peut être exprimée par la formule :

[Math.2]

$$R(T_0) = \rho(T_0) \times \frac{L(T_0)}{S(T_0)}$$

Où L est la longueur totale de la piste de la résistance chauffante et S sa section, et où $\rho$ est la résistivité du matériau conducteur de la résistance chauffante, données à la température initiale $T_0$.

Il convient dans ce cas de relier ladite résistance chauffante à un moyen de mesure de la résistance de préférence par un montage 4 fils, qui est un montage plus précis qu'un montage 2 ou 3 fils connu pour la mesure d'une résistance. $R(T_0)$ peut être mesurée de la même manière.

La figure 2 représente le noyau de mesure 16 selon le premier mode de réalisation de l'invention, représenté en vue de face et à la verticale, tel qu'il est généralement orienté dans le capteur.

Deuxième mode de réalisation (noyau de mesure)

La figure 3 représente un noyau de mesure 16' selon un deuxième mode de réalisation de l'invention représenté en vue de face. Le noyau de mesure 16' de ce deuxième mode diffère de celui du premier mode, en ce que les échantillons 161', 162' présentent les mêmes longueurs mais ils ont une forme ajourée dans les portions supérieure et inférieure. Cela permet de former quatre pattes par échantillon (deux pattes supérieures 161A', 161B', 162A', 162B' et deux pattes inférieures 161C', 161D', 162C',162D') aux quatre coins de chaque échantillon. Les pattes supérieures 161A', 161B', 162A', 162B' sont plus larges que les pattes inférieures, de manière à accueillir les pads de connexion 1641' et 1642' de la résistance chauffante 164'.

En outre, ces pattes inférieures et supérieures peuvent être mises en contact avec l'enveloppe du capteur calorimétrique, comme décrit plus après. Ainsi, comme cela sera expliqué plus après, cela permet de remplacer toutes ou certaines des entretoises nécessaires à l'assemblage du noyau de mesure dans le capteur calorimétrique. Cela permet notamment de faciliter l'assemblage et de supprimer les entretoises rapportées. Ceci permet de réduire les échauffements parasites notamment dus à des entretoises usinées dans un matériau différent de l'échantillon. Dans l'exemple représenté, les deux portions supérieure ou inférieure sont ajourées. Alternativement, seulement une portion supérieure ou une portion inférieure d'un ou de deux échantillons peut être ajourée.

Les ordres de grandeur des dimensions des échantillons donnés pour le premier mode de réalisation sont toujours valables : la largeur et la longueur d'un échantillon varient entre quelques millimètres à une quinzaine voire une dizaine de millimètres, et l'épaisseur est entre un et deux millimètres.

En outre, les première et deuxième couches isolantes (non représentées car cachées par les échantillons) ont des dimensions et des formes adaptées aux dimensions des premier et deuxième échantillons 161', 162' (elles sont également ajourées) et elles doivent toujours avoir des dimensions suffisantes dans le plan pour isoler la résistance et la protéger. Les dimensions desdites couches minces en isolant et de ladite résistance chauffante sont du même ordre de grandeur que pour le premier mode de réalisation.

Dans l'ensemble des deux modes de réalisation décrits ci-avant représentés, les échantillons et donc les noyaux de mesure présentent une forme parallélépipédique (ajourée ou non). Une telle forme permet de simplifier l'assemblage des différentes couches du noyau de mesure. Cela permet en outre d'utiliser plus facilement certaines techniques de dépôt de couche mince pour la fabrication de l'élément chauffant, notamment en le fabriquant directement sur un échantillon.

Troisième mode de réalisation (noyau de mesure)

Alternativement, les échantillons 161", 162" et donc le noyau de mesure 16" peuvent présenter une forme de disque, comme représenté en figure 4. La dimension longitudinale correspond alors au diamètre des échantillons.

Dans ce cas, la résistance chauffante 164" présente une forme de spirale circulaire, avec deux pads de connexions électriques 1641", 1642" qui peuvent être diamétralement opposés, comme représenté (non limitatif). Les deux disques formant les deux échantillons 161", 162" ont alors des diamètres $\Phi1$, $\Phi2$ différents pour accueillir les pads de connexion de la résistance chauffante.

Les couches minces 163", 165" sont également de forme de disque circulaire, leurs diamètres étant adaptés à celui de l'échantillon avec lequel elles sont directement en contact.

Les ordres de grandeur des dimensions des échantillons donnés pour le premier mode de réalisation sont toujours valables : le diamètre d'un échantillon varie entre quelques millimètres à une quinzaine voire une dizaine de millimètres, et l'épaisseur est entre un et deux millimètres.

Quatrième mode de réalisation (noyau de mesure)

Alternativement, le noyau de mesure peut être de forme cylindrique (voire hémicylindrique), la direction longitudinale correspondant à la longueur dudit cylindre, forme plus adaptée à la plupart des canaux de mesure en réacteur nucléaire. Ceci est illustré dans la figure 5 représentant un quatrième mode de réalisation d'un noyau de mesure 17 conforme à l'invention.

Dans ce mode de réalisation, les deux échantillons sont de forme hémicylindrique, c'est-à-dire sont des cylindres coupés en deux longitudinalement, chaque demi-cylindre présentant alors une surface plane, correspondant au plan principal XY, sur laquelle peut être déposé l'élément chauffant, c'est-à-dire la résistance chauffante prise en sandwich entre les deux couches minces isolantes. Les surfaces planes des demi-cylindres sont assemblées avec cet élément chauffant qui est alors pris en sandwich entre les deux demi-cylindres, de manière à former un noyau de mesure cylindrique.

Dans le quatrième mode de réalisation, les deux échantillons 171, 172 ont un même diamètre mais des longueurs différentes. La direction longitudinale de chaque échantillon hémicylindrique correspond à la longueur dudit échantillon, et celui-ci est un cylindre coupé en deux selon cette direction longitudinale.

La longueur (L1, L2) d'un échantillon varie entre quelques millimètres et une quinzaine de millimètres voire une dizaine de millimètres. La largeur maximale, donnée par le diamètre (D1, D2) varie entre quelques millimètres et une dizaine de millimètres. L'épaisseur maximale d'un échantillon donnée par le rayon (D1/2, D2/2) est de quelques millimètres.

A titre d'exemple, les premier et deuxième échantillons peuvent avoir les dimensions respectives suivantes : diamètre (D1) de 4 mm x longueur (L1) de 7 mm et diamètre (D2) de 4 mm x longueur (L2) de 4 mm.

Les dimensions des couches minces en isolant (173, 175) et de la résistance chauffante (174) sont du même ordre de grandeur que pour les autres modes de réalisation. Etant donné que l'élément chauffant est disposé sur la surface plane XY, il peut être de forme rectangulaire.

De manière générale, la forme du noyau de mesure est conditionnée par la forme des échantillons, ainsi que par le nombre d'échantillon(s). Par exemple, s'il n'y a qu'un seul échantillon hémicylindrique, alors la forme du noyau de mesure est hémicylindrique également.

Dans l'ensemble des modes représentés, on peut constater que l'ensemble des couches permet de former un noyau de mesure dont l'épaisseur est au plus de quelques millimètres, ce qui permet de réduire l'épaisseur du capteur calorimétrique. Par ailleurs, les dimensions dans le plan du noyau de mesure (longueur, largeur, et/ou diamètre) sont de l'ordre du centimètre. En outre, les couches de l'élément chauffant sont des couches minces qui sont négligeables en masse et en épaisseur par rapport aux échantillons qui sont quant à eux dimensionnés pour permettre les interactions rayonnements-matière et la quantification de l'échauffement nucléaire, et doivent présenter pour cela au moins une épaisseur minimale.

Les figures 1A à 1D, 2, 3, 4 et 5 représentent des noyaux de mesure comportant deux échantillons, étant entendu qu'un seul échantillon peut être suffisant.

En effet, il peut être suffisant voire avantageux de n'avoir qu'un échantillon, par exemple dans un ou plusieurs des cas suivants :

- lorsque l'échantillon a une densité et un numéro atomique élevés, suffisants pour avoir des dépôts d'énergie significatifs et mesurer l'échauffement nucléaire ; et/ou
- lorsqu'il est difficile d'obtenir deux échantillons de faibles épaisseurs associés à un état de surface adapté (surface suffisamment polie) pour déposer les couches minces par une des techniques de microélectronique ; et/ou
- lorsqu'on souhaite simplifier le montage du noyau de mesure ; et/ou
- pour éviter de former une résistance thermique de contact par assemblage de deux échantillons ; et/ou
- pour réduire la masse du noyau de mesure, et ainsi notamment augmenter la plage de mesure.

Lorsqu'il n'y a qu'un seul échantillon, les modes de réalisation ci-avant, ainsi que les méthodes de fabrication s'appliquent, à ceci près que la deuxième couche de matière formant le deuxième échantillon n'est pas présente. La résistance électrique chauffante est prise en sandwich entre les deux couches minces en isolant afin, d'un côté, de l'isoler de l'échantillon et de l'autre côté, de la protéger.

A l'inverse, un noyau de mesure à deux échantillons présente les avantages suivants :

- une symétrie d'ensemble : en effet, l'élément chauffant se retrouve au centre d'un ensemble composé de deux échantillons et de deux couches minces d'isolant électrique ;
- une meilleure homogénéité thermique dans l'échantillon.

Les deux échantillons sont en le même matériau. Ils présentent de préférence les mêmes formes et les mêmes dimensions, sauf la longueur ou le diamètre qui peut être différente. Ils présentent en outre les mêmes états de surface.

Il est possible d'agir sur les formes et les dimensions du (ou des) échantillon(s) afin de contrôler la sensibilité du capteur, au lieu ou en complément de l'action sur la forme ou les dimensions du capteur calorimétrique et/ou sur la nature du gaz et/ou la taille des lames de gaz dans le capteur.

Dans l'ensemble des modes représentés, et plus généralement dans le cadre de l'invention, des couches complémentaires peuvent être rajoutées dans le noyau de mesure.

Couche mince d'accroche :

Une couche mince d'accroche peut être prévue entre la résistance chauffante et au moins une couche mince en isolant (la couche d'isolant sur laquelle la résistance est déposée). Une couche d'accroche a pour fonction de permettre une meilleure accroche de la résistance chauffante sur la couche d'isolant. L'épaisseur d'une couche d'accroche doit être très faible (quelques nano-mètres) pour ne pas perturber l'ensemble. Cette couche d'accroche, doit présenter la même forme que l'élément chauffant. En outre, selon la nature des matériaux et les conditions de dépôt, une autre couche d'accroche peut être déposée entre le (ou les) échantillon(s) et une (ou des) couche(s) mince(s) en isolant, pour une meilleure accroche d'une (ou des) couche(s) mince(s) en isolant sur le (ou les) échantillon(s). Une couche d'accroche peut être par exemple une couche de titane ou une couche de tantale.

Couche fonctionnelle :

Au moins une couche fonctionnelle peut être ajoutée au noyau de mesure. Cela peut être une couche de bore, de cadmium, de carbure de silicium (SiC) et/ou de lithium. Une couche fonctionnelle présente des dimensions inférieures à celles des échantillons, et peut être apposée sur un échantillon (par exemple sur sa face extérieure). Elle peut avoir par exemple une épaisseur du même ordre que les autres couches minces. Une telle couche fonctionnelle peut permettre de : générer des interactions spécifiques sélectives, et/ou convertir des particules/rayonnements, et/ou amplifier l'échauffement nucléaire.

Premier mode de réalisation (capteur calorimétrique)

Les figures 6A (vue en coupe longitudinale) et 6B (vue en 3D) illustrent un capteur calorimétrique selon un premier mode de réalisation. Celui-ci est représenté avec un noyau de mesure configuré selon le premier mode de réalisation, mais il pourrait comprendre un noyau de mesure selon l'un des autres modes de réalisation ou tout autre noyau de mesure entrant dans la portée de l'invention.

Pour former un capteur calorimétrique, le noyau de mesure est intégré dans une enveloppe contenant du gaz, et est maintenu centré dans ladite enveloppe grâce à plusieurs entretoises qui permettent en outre de transférer la chaleur entre le noyau de mesure et l'enveloppe.

Ainsi, le capteur de mesure 1 représenté comprend :

- une enveloppe externe 11, étant une enveloppe étanche aux fluides ;
- un gaz 12 contenu dans l'enveloppe ;
- un noyau de mesure 16 intégré dans l'enveloppe ;
- une pluralité d'entretoises 13 reliant le noyau et l'enveloppe et permettant de maintenir, positionner, voire centrer, ledit noyau dans ladite enveloppe ;
- deux capteurs de température : un premier capteur de température « chaud » 14 et un deuxième capteur de température « froid » 15 ;
- des fils de connexion 19A et 19B (entre deux et quatre) reliés à l'élément chauffant du noyau de mesure.

L'enveloppe étanche permet de contenir et protéger les différents éléments. Par ailleurs, l'enveloppe est adaptée pour être en contact direct avec un fluide caloporteur afin d'évacuer l'énergie thermique.

L'enveloppe peut être notamment en aluminium, en acier inoxydable ou en titane.

L'enveloppe représentée est de forme parallélépipédique. Les dimensions de l'enveloppe sont typiquement de quelques centimètres, par exemple une longueur de l'ordre de trois centimètres, une largeur de l'ordre de deux centimètres, et une profondeur de l'ordre d'un centimètre. Les dimensions pourraient cependant être réduites et varient plus généralement entre quelques millimètres et quelques centimètres (typiquement inférieures ou égales à trois centimètres). L'épaisseur des parois de l'enveloppe est par exemple d'un ½ millimètre.

Alternativement, l'enveloppe peut être de forme cylindrique, forme plus adaptée à la plupart des canaux de mesure en réacteur nucléaire. Dans ce cas, le noyau de mesure est de préférence cylindrique ou hémicylindrique mais une forme parallélépipédique pourrait convenir. Une enveloppe cylindrique peut présenter une extrémité conique afin d'améliorer l'écoulement du fluide caloporteur autour du capteur calorimétrique.

La sensibilité du capteur peut être ajustée en choisissant la nature du gaz en fonction de sa conductivité thermique et donc en jouant sur la résistance thermique de la lame de gaz. Il peut en outre permettre d'éviter l'oxydation dans le capteur. Le gaz peut être de l'hélium, du diazote, de l'argon ou du xénon. Le gaz peut être en surpression de quelques dizaines de mbars par rapport à la pression atmosphérique.

Le premier capteur de température est au plus près du centre du noyau de mesure et permet de mesurer une température en un point dit « chaud ». Le deuxième capteur de température est disposé sur (ou intégré à) l'enveloppe et permet de mesurer une température en un point dit « froid ». Les mesures de température en les points froid et chaud permettent de déterminer l'échauffement nucléaire.

Le premier capteur peut être un thermocouple, par exemple de type K ou N, dont le diamètre est de préférence compris entre 0,1 mm et 0,5 mm. Les matériaux des thermocouples peuvent être : Chromel (Ni-Cr), Alumel (Ni-Al), Nicrosil (Ni-Cr-Si), Nisil (Ni-Si). Le premier capteur est au plus proche de l'élément chauffant, et il est de préférence géométriquement aligné par rapport au centre de l'élément chauffant. Alternativement, comme indiqué dans la variante de réalisation décrite ci-avant, le premier capteur peut être formé par l'élément chauffant qui forme alors une sonde résistive de température.

Le deuxième capteur peut être un thermocouple, par exemple de type K ou N, dont le diamètre est de préférence compris entre 0,1 mm et 0,5 mm. Les matériaux des thermocouples peuvent être : Chromel (Ni-Cr), Alumel (Ni-Al), Nicrosil (Ni-Cr-Si), Nisil (Ni-Si). Le deuxième capteur peut être géométriquement aligné par rapport au centre de l'élément chauffant, avec une prise de température au niveau de l'enveloppe, comme représenté. Cela peut être au niveau de la face interne ou au niveau de la face externe de la paroi de l'enveloppe.

Chaque capteur de température est câblé à l'aide d'un connecteur (non représenté) pour déporter la mesure du noyau de mesure à la centrale d'acquisition.

Les capteurs de température peuvent avantageusement être des micro-thermocouples, soit des micro-thermocouples filaires, soit des micro-thermocouples en couches minces. Le diamètre (micro-thermocouple filaire) ou l'épaisseur (micro-thermocouple en couche) d'un tel capteur est de l'ordre de quelques micromètres au niveau du point de mesure. Des raccords avec des diamètres similaires aux thermocouples classiques sont également nécessaires pour déporter la mesure du noyau de mesure à la centrale d'acquisition. Le faible encombrement des micro-thermocouples a pour avantage de moins perturber la mesure par leur plus faible intrusivité, surtout dans le cas où les dimensions du noyau de mesure sont comparables à celles des capteurs de température. Ils sont positionnés à la même position que les thermocouples classiques : proche de l'élément chauffant et proche de l'enveloppe.

La résistance chauffante est câblée à l'aide des fils (entre deux et quatre fils) 19A et 19B qui traversent l'enveloppe 11 puis qui sont reliés à des connecteurs pour le raccordement à des alimentations électriques et à une centrale d'acquisition.

Les entretoises peuvent être sous forme de tiges cylindriques (avec un diamètre de 1 millimètre par exemple) et/ou parallélépipédiques.

De préférence, les entretoises sont en un matériau identique à celui des échantillons, par exemple en aluminium, en acier inoxydable ou en Titane. Au-delà de leur fonction de maintien, positionnement et/ou centrage, les entretoises sont également configurées pour transférer la chaleur entre le noyau de mesure et l'enveloppe. Ainsi elles peuvent être de dimensions choisies pour former une résistance thermique donnée et donc être un paramètre d'ajustement de la sensibilité du capteur. En outre, il est recherché des entretoises dont l'épaisseur et les dimensions permettent de ne pas ajouter de masse parasite.

Tout ou partie des entretoises peuvent être formées par des pattes aux quatre coins des échantillons par une forme ajourée des échantillons comme illustré en figure 3 et dans la figure 7 décrite ci-après, et/ou par des formes en pointes prévues à l'intérieur de l'enveloppe.

Deuxième mode de réalisation (capteur calorimétrique)

La figure 7 représente un capteur calorimétrique selon un deuxième mode de réalisation dans lequel le noyau de mesure présentent une forme ajourée, comme le noyau de mesure 16' de la figure 3.

Le capteur calorimétrique 1' représenté ne comprend pas d'entretoises, le noyau de mesure 16' étant maintenu dans l'enveloppe 11 grâce aux pattes des deux échantillons ajourés (huit pattes au total). Dans ce cas, la chaleur n'est conduite majoritairement que longitudinalement. On peut rajouter des entretoises pour transmettre la chaleur transversalement/radialement et/ou pour centrer le noyau de mesure transversalement/radialement.

Alternativement, seulement une portion supérieure ou inférieure des échantillons est ajourée, par exemple la portion supérieure et on peut rajouter des entretoises sous la portion inférieure.

Les différents modes, variantes et exemples de réalisation présentés peuvent être combinés suivant toutes les combinaisons techniquement possibles.

En outre, la présente invention n'est pas limitée aux modes de réalisation précédemment décrits mais s'étend à tout mode de réalisation entrant dans la portée des revendications.

## Revendications

1. Noyau de mesure (16, 16', 16", 17) pour la mesure d'échauffement nucléaire dans un réacteur nucléaire, ledit noyau s'étendant selon une direction longitudinale (X) et présentant un plan principal (XY), ledit noyau de mesure comprenant au moins :

   - une première couche de matière, formant un premier échantillon (161, 161', 161", 171) ;
   - une première couche mince en isolant électrique (163, 163",173) disposée sur le premier échantillon ;
   - une couche conductrice mince formant une résistance électrique chauffante (164, 164', 164",174) disposée sur la première couche d'isolant électrique ;
   - une deuxième couche mince en isolant électrique (165, 165", 175) disposée sur la résistance électrique chauffante ;
   la première couche mince en isolant présentant des dimensions dans le plan principal adaptées à celles du premier échantillon ;
   les couches minces en isolant électrique étant configurées pour isoler la résistance chauffante de l'échantillon et protéger ladite résistance chauffante ; et
   le premier échantillon présentant de préférence des dimensions inférieures ou égales à une quinzaine, voire une dizaine de millimètres dans le plan principal, et/ou une épaisseur inférieure ou égale à 10 millimètres, encore plus préférentiellement inférieure ou égale à 2 millimètres.

2. Noyau de mesure (16, 16', 16", 17) selon la revendication 1 comprenant en outre :

   - une deuxième couche de matière, formant un deuxième échantillon (162, 162', 162", 172) ; la deuxième couche mince en isolant électrique étant entre la résistance chauffante et le deuxième échantillon ;
   la deuxième couche mince en isolant électrique présentant des dimensions dans le plan principal adaptées à celles du deuxième échantillon ;
   la deuxième couche en isolant électrique étant configurée pour isoler la résistance chauffante du deuxième échantillon ;
   le deuxième échantillon présentant de préférence des dimensions inférieures ou égales à une quinzaine, voire une dizaine de millimètres dans le plan principal, et/ou une épaisseur inférieure ou égale à 10 millimètres, encore plus préférentiellement inférieure ou égale à 2 millimètres.

3. Noyau de mesure (16, 16", 17) selon la revendication 2, le premier échantillon (161, 161", 171) présentant une longueur (L1), respectivement un diamètre ($\Phi$1), supérieur(e) à la longueur (L2), respectivement au diamètre ($\Phi$2), du deuxième échantillon (162, 162", 172).

4. Noyau de mesure (16, 16', 16", 17) selon l'une des revendications précédentes, la résistance chauffante (164, 164', 164", 174) comprenant une piste en un matériau conducteur conformée en serpentin, spirale, méandre(s).

5. Noyau de mesure (16, 16', 16", 17) selon l'une des revendications précédentes, la résistance chauffante (164, 164', 164', 174) étant en platine, en un alliage nickel-chrome, en constantan.

6. Noyau de mesure (16, 16', 16", 17) selon l'une des revendications précédentes, les couches minces en isolant électrique étant en oxyde de silicium, en alumine, en nitrure de silicium, ou en oxyde de magnésium.

7. Noyau de mesure (16, 16', 16", 17) selon l'une des revendications précédentes, le (ou les) échantillon(s) étant en graphite, en acier inoxydable, en aluminium, ou en titane.

8. Noyau de mesure (16, 16', 16", 17) selon l'une des revendications précédentes, le (ou les) échantillon(s) présentant un état de surface adapté pour le dépôt d'au moins une couche mince en isolant électrique par une technique de dépôt de couches minces, par exemple un état de surface poli miroir.

9. Noyau de mesure selon l'une des revendications précédentes comprenant en outre au moins une couche d'accroche entre la résistance chauffante et au moins une couche mince en isolant électrique et/ou entre au moins un échantillon et au moins une couche mince en isolant électrique.

10. Noyau de mesure selon l'une des revendications précédentes comprenant en outre au moins une couche fonctionnelle, pouvant être une couche de bore, de cadmium, de carbure de silicium (SiC) et/ou de lithium, ladite couche fonctionnelle pouvant être déposée sur la face extérieure d'au moins un échantillon.

11. Noyau de mesure (16, 16') selon l'une des revendications 1 à 10, le premier échantillon (161, 161'), et le cas échéant le deuxième échantillon (162, 162'), étant de forme parallélépipédique, formant un noyau parallélépipédique.

12. Noyau de mesure (17) selon l'une des revendications 1 à 10, le premier échantillon (171), et le cas échéant le deuxième échantillon (172), étant de forme hémicylindrique formant un noyau hémicylindrique ou cylindrique, la longueur de cylindre s'étendant selon la direction longitudinale (X).

13. Noyau de mesure (16") selon l'une des revendications 1 à 10, le premier échantillon (161"), et le cas échéant le deuxième échantillon (162"), étant en forme de disque, le diamètre de disque s'étendant selon la direction longitudinale (X).

14. Noyau de mesure (16') selon l'une des revendications précédentes, au moins un échantillon (161', 162') étant ajouré au niveau d'au moins une portion supérieure et/ou inférieure, de manière à former au moins deux pattes supérieures (161A', 161B', 162A', 162B') et/ou au moins deux pattes inférieures (161C', 161D', 162C', 162D').

15. Noyau de mesure (16') selon la revendication 14, les pattes supérieures étant dimensionnées pour accueillir les éléments de connexion (1641', 1642') de la résistance chauffante (164'), les pattes supérieures ayant par exemple une largeur supérieure aux pattes inférieures.

16. Noyau de mesure (16, 16', 16", 17) selon l'une des revendications précédentes, la résistance chauffante étant configurée pour former une sonde résistive de température, de manière à mesurer la température dans une zone comprenant un point chaud de mesure de température, ladite résistance chauffante étant alors reliée à un moyen de mesure de la résistance, de préférence par un montage quatre fils.

17. Capteur calorimétrique (1, 1') pour la mesure d'échauffement nucléaire dans un réacteur nucléaire, ledit capteur comprenant :

   - une enveloppe externe (11) étanche aux fluides ;
   - un gaz (12) contenu dans l'enveloppe externe ;
   - un noyau de mesure (16, 16', 16", 17) choisi selon l'une quelconque des revendications 1 à 16, ledit noyau étant disposé dans l'enveloppe externe ;
   - des moyens de liaison (13, 161 A', 161B', 161C', 161D', 162A', 162B',162C',162D') aptes à maintenir le noyau de mesure dans l'enveloppe externe et à transférer la chaleur entre ledit noyau et ladite enveloppe ;
   - des moyens de mesure de température (14, 164, 164', 164", 174, 15), comprenant un premier moyen de mesure de température (14, 164, 164', 164", 174) apte à mesurer la température en un point chaud, de préférence au plus près de l'élément chauffant du noyau de mesure, et un deuxième moyen de mesure de température (15) apte à mesurer la température en un point froid, de préférence sur une paroi de l'enveloppe (11).

18. Capteur calorimétrique (1, 1') selon la revendication 17, les moyens de mesure de température (14, 15) comprenant au moins un thermocouple, de préférence un micro-thermocouple filaire ou un micro-thermocouple en couches minces.

19. Capteur calorimétrique (1, 1') selon la revendication 17 ou la revendication 18, le noyau de mesure étant choisi selon la revendication 16, le premier moyen de mesure de température étant formé par la résistance chauffante (164, 164', 164", 174).

20. Capteur calorimétrique (1, 1') selon l'une des revendications 17 à 19, les moyens de liaison comprenant des entretoises (13) pouvant avoir des formes et des matériaux différents.

21. Capteur calorimétrique (1, 1') selon l'une des revendications 17 à 20, au moins un échantillon (161', 162') étant ajouré au niveau d'au moins une portion supérieure et/ou inférieure, de manière à former au moins deux pattes supérieures (161A', 161B', 162A', 162B') et/ou au moins deux pattes inférieures (161C',161D',162C',162D'), les moyens de liaison étant tout ou partie formés par lesdites pattes.

22. Capteur calorimétrique (1, 1') selon l'une des revendications 17 à 21, l'enveloppe (11) étant en aluminium, en acier inoxydable ou en titane.

23. Capteur calorimétrique (1, 1') selon l'une des revendications 17 à 22, l'enveloppe (11) étant de forme parallélépipédique ou de forme cylindrique, présentant éventuellement une extrémité conique afin d'améliorer l'écoulement du fluide caloporteur autour du capteur calorimétrique.

**Patentansprüche**

1. Messkern (16, 16', 16'', 17) zur Messung der Kernerwärmung in einem Kernreaktor, wobei sich der Kern in einer Längsrichtung (X) erstreckt und eine Hauptebene (XY) aufweist, wobei der Messkern mindestens Folgendes umfasst:

   - eine erste Materialschicht, die eine erste Probe (161, 161', 161'', 171) bildet;
   - eine erste dünne Schicht aus elektrischem Isoliermaterial (163, 163'', 173), die auf der ersten Probe angeordnet ist;
   - eine dünne leitfähige Schicht, die einen elektrischen Heizwiderstand bildet (164, 164', 164'', 174), der auf der ersten elektrischen Isolierschicht angeordnet ist;
   - eine zweite dünne Schicht aus elektrischem Isoliermaterial (165, 165'', 175), die auf dem elektrischen Heizwiderstand angeordnet ist;
   wobei die erste dünne Schicht aus Isoliermaterial Abmessungen in der Hauptebene aufweist, die an diejenigen der ersten Probe angepasst sind;
   wobei die dünnen Schichten aus elektrischem Isoliermaterial so konfiguriert sind, dass sie den Heizwiderstand von der Probe isolieren und den Heizwiderstand schützen, und
   wobei die erste Probe vorzugsweise Abmessungen von kleiner oder gleich rund fünfzehn oder sogar rund zehn Millimetern in der Hauptebene und/oder eine Dicke von kleiner oder gleich 10 Millimetern, noch bevorzugter kleiner oder gleich 2 Millimetern, aufweist.

2. Messkern (16, 16', 16'', 17) nach Anspruch 1, ferner Folgendes umfassend:

   - eine zweite Materialschicht, die eine zweite Probe (162, 162', 162'', 172) bildet; wobei sich die zweite dünne Schicht aus elektrischem Isoliermaterial zwischen dem Heizwiderstand und der zweiten Probe befindet;
   wobei die zweite dünne Schicht aus Isoliermaterial Abmessungen in der Hauptebene aufweist, die an diejenigen der zweiten Probe angepasst sind;
   wobei die zweite Schicht aus elektrischem Isoliermaterial so konfiguriert ist, dass sie den Heizwiderstand von der zweiten Probe isoliert;
   wobei die zweite Probe vorzugsweise Abmessungen von kleiner oder gleich rund fünfzehn oder sogar rund zehn Millimetern in der Hauptebene und/oder eine Dicke von kleiner oder gleich 10 Millimetern, noch bevorzugter kleiner oder gleich 2 Millimetern, aufweist.

3. Messkern (16, 16'', 17) nach Anspruch 2, wobei die erste Probe (161, 161'', 171) eine Länge (L1) beziehungsweise einen Durchmesser ($\Phi$1) aufweist, die beziehungsweise der größer ist als die Länge (L2) beziehungsweise der Durchmesser ($\Phi$2) der zweiten Probe (162, 162'', 172).

4. Messkern (16, 16', 16'', 17) nach einem der vorhergehenden Ansprüche, wobei der Heizwiderstand (164, 164', 164'', 174) eine Bahn aus einem leitfähigen Material umfasst, die in Form einer Schlange, einer Spirale oder eines Mäanders ausgebildet ist.

5. Messkern (16, 16', 16'', 17) nach einem der vorhergehenden Ansprüche, wobei der Heizwiderstand (164, 164', 164'', 174) aus Platin, einer Nickel-Chrom-Legierung oder Konstantan besteht.

6. Messkern (16, 16', 16'', 17) nach einem der vorhergehenden Ansprüche, wobei die dünnen Schichten aus elektrischem Isoliermaterial aus Siliziumoxid, Aluminiumoxid, Siliziumnitrid oder Magnesiumoxid bestehen.

7. Messkern (16, 16', 16'', 17) nach einem der vorhergehenden Ansprüche, wobei die Probe(n) aus Graphit, Edelstahl, Aluminium oder Titan besteht beziehungsweise bestehen.

8. Messkern (16, 16', 16", 17) nach einem der vorhergehenden Ansprüche, wobei die Probe(n) eine Oberflächenbeschaffenheit aufweist beziehungsweise aufweisen, die für die Ablagerung mindestens einer dünnen Schicht aus elektrischem Isoliermaterial durch eine Dünnschichtablagerungstechnik angepasst ist, beispielsweise eine spiegelpolierte Oberflächenbeschaffenheit.

9. Messkern nach einem der vorhergehenden Ansprüche, ferner umfassend mindestens eine Haftschicht zwischen dem Heizwiderstand und mindestens einer dünnen Schicht aus elektrischem Isoliermaterial und/oder zwischen mindestens einer Probe und mindestens einer dünnen Schicht aus elektrischem Isoliermaterial umfasst.

10. Messkern nach einem der vorhergehenden Ansprüche, ferner umfassend mindestens eine Funktionsschicht, die eine Schicht aus Bor, Cadmium, Siliziumkarbid (SiC) und/oder Lithium sein kann, wobei die Funktionsschicht auf der Außenseite mindestens einer Probe abgelagert sein kann.

11. Messkern (16, 16') nach einem der Ansprüche 1 bis 10, wobei die erste Probe (161, 161') und gegebenenfalls die zweite Probe (162, 162') quaderförmig sind, wodurch sie einen quaderförmigen Kern bilden.

12. Messkern (17) nach einem der Ansprüche 1 bis 10, wobei die erste Probe (171), und gegebenenfalls die zweite Probe (172), eine halbzylindrische Form aufweisen, wodurch sie einen halbzylindrischen oder zylindrischen Kern bilden, wobei sich die Zylinderlänge in Längsrichtung (X) erstreckt.

13. Messkern (16'') nach einem der Ansprüche 1 bis 10, wobei die erste Probe (161''), und gegebenenfalls die zweite Probe (162''), eine Scheibenform aufweisen, wobei sich der Scheibendurchmesser in Längsrichtung (X) erstreckt.

14. Messkern (16') gemäß einem der vorhergehenden Ansprüche, wobei mindestens eine Probe (161', 162') an mindestens einem oberen und/oder unteren Abschnitt durchbrochen ist, sodass mindestens zwei obere Laschen (161A' 161B', 162A', 162B') und/oder mindestens zwei unteren Laschen (161C', 161D', 162C', 162D') gebildet werden.

15. Messkern (16') nach Anspruch 14, wobei die oberen Laschen so bemessen sind, dass sie die Verbindungselemente (1641', 1642') des Heizwiderstands (164') aufnehmen können, wobei die oberen Laschen beispielsweise eine größere Breite als die unteren Laschen aufweisen.

16. Messkern (16, 16', 16'', 17) nach einem der vorhergehenden Ansprüche, wobei der Heizwiderstand so konfiguriert ist, dass er einen Widerstandstemperaturfühler bildet, um die Temperatur in einem Bereich zu messen, der eine heiße Stelle zur Temperaturmessung umfasst, wobei der Heizwiderstand dann mit einem Mittel zur Messung des Widerstands verbunden ist, vorzugsweise durch eine Vierleiter-Schaltung.

17. Kalorimetrischer Sensor (1, 1') zur Messung der Kernerwärmung in einem Kernreaktor, wobei der Sensor Folgendes umfasst:

    - eine fluiddichte Außenhülle (11)
    - ein in der Außenhülle enthaltenes Gas (12)
    - einen Messkern (16, 16', 16'', 17), der nach einem der Ansprüche 1 bis 16 ausgewählt ist, wobei der Kern in der äußeren Hülle angeordnet ist;
    - Verbindungsmittel (13, 161A', 161B', 161C', 161D', 162A', 162B', 162C', 162D'), die in der Lage sind, den Messkern in der äußeren Hülle zu halten und die Wärme zwischen dem Kern und der Hülle zu übertragen;
    - Temperaturmessmittel (14, 164, 164', 164'', 174, 15), umfassend ein erstes Temperaturmessmittel (14, 164, 164', 164'', 174), das in der Lage ist, die Temperatur an einem heißen Punkt zu messen, vorzugsweise so nahe wie möglich am Heizelement des Messkerns, und ein zweites Temperaturmessmittel (15), das in der Lage ist, die Temperatur an einem kalten Punkt zu messen, vorzugsweise an einer Wand der Hülle (11).

18. Kalorimetrischer Sensor (1, 1') nach Anspruch 17, wobei die Temperaturmessmittel (14, 15) mindestens ein Thermoelement, vorzugsweise ein drahtgebundenes Mikrothermoelement oder ein Dünnschicht-Mikrothermoelement, umfassen.

19. Kalorimetrischer Sensor (1, 1') nach Anspruch 17 oder Anspruch 18, wobei der Messkern nach Anspruch 16 gewählt ist, wobei das erste Temperaturmessmittel durch den Heizwiderstand (164, 164', 164", 174) gebildet wird.

20. Kalorimetrischer Sensor (1, 1') nach einem der Ansprüche 17 bis 19, wobei die Verbindungsmittel Abstandhalter (13) umfassen, die unterschiedliche Formen und Materialien aufweisen können.

21. Kalorimetrischer Sensor (1, 1') nach einem der Ansprüche 17 bis 20, wobei mindestens eine Probe (161', 162') an mindestens einem oberen und/oder unteren Abschnitt durchbrochen ist, sodass mindestens zwei obere Laschen (161A', 161B', 162A', 162B') und/oder mindestens zwei unteren Laschen (161C', 161D', 162C', 162D') gebildet werden, wobei die Verbindungsmittel ganz oder teilweise durch die Laschen gebildet werden.

22. Kalorimetrischer Sensor (1, 1') nach einem der Ansprüche 17 bis 21, wobei die Hülle (11) aus Aluminium, Edelstahl oder Titan besteht.

23. Kalorimetrischer Sensor (1, 1') nach einem der Ansprüche 17 bis 22, wobei die Hülle (11) eine quaderförmige oder zylindrische Form aufweist, die wahlweise ein konisches Ende aufweist, um den Fluss des Wärmeträgerfluids um den kalorimetrischen Sensor herum zu verbessern.

## Claims

1. A measurement core (16, 16', 16'', 17) for measuring nuclear heating in a nuclear reactor, said core extending in a longitudinal direction (X) and having a main plane (XY), said measurement core comprising at least:

   - a first layer of material, forming a first sample (161, 161', 161", 171);
   - a first thin layer of electrical insulation (163, 163'', 173) disposed on the first sample;
   - a thin conductive layer forming a heating electrical resistor (164, 164', 164'', 174) disposed on the first layer of electrical insulation;
   - a second thin layer of electrical insulation (165, 165'', 175) disposed on the heating electrical resistor;
   the first thin layer of insulation having dimensions in the main plane matched to those of the first sample;
   the thin layers of electrical insulation being configured to insulate the heating resistor from the sample and protect said heating resistor; and
   the first sample preferably having dimensions less than or equal to around fifteen, even around ten, millimetres in the main plane, and/or a thickness less than or equal to 10 millimetres, even more preferably less than or equal to 2 millimetres.

2. The measurement core (16, 16', 16'', 17) according to claim 1, further comprising:

   - a second layer of material, forming a second sample (162, 162', 162'', 172); the second thin layer of electrical insulation being between the heating resistor and the second sample;
   the second thin layer of electrical insulation having dimensions in the main plane matched to those of the second sample;
   the second layer of electrical insulation being configured to insulate the heating resistor from the second sample;
   the second sample preferably having dimensions less than or equal to around fifteen, even around ten, millimetres in the main plane, and/or a thickness less than or equal to 10 millimetres, even more preferably less than or equal to 2 millimetres.

3. The measurement core (16, 16'', 17) according to claim 2, the first sample (161, 161", 171) having a length (L 1), respectively a diameter ($\Phi$1), greater than the length (L2), respectively the diameter ($\Phi$2), of the second sample (162, 162", 172).

4. The measurement core (16, 16', 16'', 17) according to one of the preceding claims, the heating resistor (164, 164', 164'', 174) comprising a track made of a conductive material in coil, spiral or meander form.

5. The measurement core (16, 16', 16'', 17) according to one of the preceding claims, the heating resistor (164, 164', 164'', 174) being made of platinum, of a nickel-chromium alloy, or of constantan.

6. The measurement core (16, 16', 16'', 17) according to one of the preceding claims, the thin layers of electrical insulation being made of silicon oxide, of alumina, of silicon nitride, or of magnesium oxide.

7. The measurement core (16, 16', 16'', 17) according to one of the preceding claims, the sample or samples being made of graphite, of stainless steel, of aluminium, or of titanium.

8. The measurement core (16, 16', 16'', 17) according to one of the preceding claims, the sample or samples having a surface texture suitable for the deposition of at least one thin layer of electrical insulation by a thin layer deposition technique, for example a mirror-polished surface texture.

9. The measurement core according to one of the preceding claims, further comprising at least one adhesion layer between the heating resistor and at least one thin layer of electrical insulation and/or between at least one sample and at least one thin layer of electrical insulation.

10. The measurement core according to one of the preceding claims, further comprising at least one functional layer, that can be a layer of boron, of cadmium, of silicon carbide (SiC) and/or of lithium, said functional layer being able to be deposited on the outer face of at least one sample.

11. The measurement core (16, 16') according to one of claims 1 to 10, the first sample (161, 161'), and if appropriate the second sample (162, 162'), being of parallelepipedal form, forming a parallelepipedal core.

12. The measurement core (17) according to one of claims 1 to 10, the first sample (171), and if appropriate the second sample (172), being of semicylindrical form, forming a semicylindrical or cylindrical core, the cylinder length extending in the longitudinal direction (X).

13. The measurement core (16") according to one of claims 1 to 10, the first sample (161"), and if appropriate the second sample (162"), being of disc form, the disc diameter extending in the longitudinal direction (X).

14. The measurement core (16') according to one of the preceding claims, at least one sample (161', 162') having an openwork at at least one upper and/or lower portion, so as to form at least two upper lugs (161A', 161B', 162A', 162B') and/or at least two lower lugs (161C', 161D', 162C', 162D').

15. The measurement core (16') according to claim 14, the upper lugs being dimensioned to accommodate the connection elements (1641', 1642') of the heating resistor (164'), the upper lugs having, for example, a width greater than the lower lugs.

16. The measurement core (16, 16', 16'', 17) according to one of the preceding claims, the heating resistor being configured to form a resistive temperature probe, so as to measure the temperature in a zone comprising a temperature measurement hot point, said heating resistor being then linked to a measurement means of the resistor, preferably by a four-wire circuit.

17. A calorimetric sensor (1, 1') for measuring nuclear heating in a nuclear reactor, said sensor comprising:

- a fluid-tight outer jacket (11);
- a gas (12) contained in the outer jacket;
- a measurement core (16, 16', 16'', 17) chosen according to any one of claims 1 to 16, said core being disposed in the outer jacket;
- link means (13, 161A', 161B', 161C', 161D', 162A', 162B', 162C', 162D') capable of holding the measurement core in the outer jacket and of transferring the heat between said core and said jacket;
- temperature measurement means (14, 164, 164', 164", 174, 15), comprising a first temperature measurement means (14, 164, 164', 164'', 174) capable of measuring the temperature at a hot point, preferably as close as possible to the heating element of the measurement core, and a second temperature measurement means (15) capable of measuring the temperature at a cold point, preferably on a wall of the jacket (11).

18. The calorimetric sensor (1, 1') according to claim 17, the temperature measurement means (14, 15) comprising at least one thermocouple, preferably a wired microthermocouple or a thin-film microthermocouple.

19. The calorimetric sensor (1, 1') according to claim 17 or claim 18, the measurement core being chosen according to claim 16, the first temperature measurement means being formed by the heating resistor (164, 164', 164'', 174).

20. The calorimetric sensor (1, 1') according to one of claims 17 to 19, the link means comprising spacers (13) that can have different forms and materials.

21. The calorimetric sensor (1, 1') according to one of claims 17 to 20, at least one sample (161', 162') having an openwork at at least an upper and/or lower portion, so as to form at least two upper lugs (161A', 161B', 162A', 162B') and/or at least two lower lugs (161C', 161D', 162C', 162D'), the link means being wholly or partly formed by said lugs.

22. The calorimetric sensor (1, 1') according to one of claims 17 to 21, the jacket (11) being made of aluminium, of stainless steel or of titanium.

23. The calorimetric sensor (1, 1') according to one of claims 17 to 22, the jacket (11) being of parallelepipedal form or of cylindrical form, possibly having a tapered end in order to enhance the flow of the heat-transfer fluid around the calorimetric sensor.

[Fig 1A]

163

161

[Fig 1B]

164

1641

1642

[Fig 1C]

165

[Fig 1D]

16

162

L2

165

164

163

161

L1

Z  Y
X

[Fig 2]

[Fig 3]

[Fig 4]

EP 4 016 549 B1

[Fig 5]

[Fig 6A]

21

[Fig 6B]

[Fig 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2968448

- FR 3034867